(19) Europäisches Patentamt / European Patent Office / Office européen des brevets

(11) **EP 2 688 349 B1**

(12) **EUROPEAN PATENT SPECIFICATION**

(45) Date of publication and mention
of the grant of the patent:
**22.06.2016 Bulletin 2016/25**

(51) Int Cl.:
***H04W 72/04*** (2009.01)

(21) Application number: **12305868.7**

(22) Date of filing: **18.07.2012**

(54) **A method for signaling of control information, and network devices therefor**

Verfahren zur Signalisierung einer Steuerungsinformation und Netzwerkvorrichtungen dafür

Procédé pour la signalisation d'informations de contrôle et dispositifs de réseau correspondants

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.01.2014 Bulletin 2014/04**

(73) Proprietor: **ALCATEL LUCENT
92100 Boulogne-Billancourt (FR)**

(72) Inventor: **Braun, Volker
70176 Stuttgart (DE)**

(74) Representative: **Kleinbub, Oliver et al
Alcatel-Lucent Deutschland AG
Intellectual Property & Standards
Lorenzstrasse 10
70435 Stuttgart (DE)**

(56) References cited:
**US-A1- 2008 056 229     US-A1- 2008 101 281**

## Description

### Field of the invention

The invention relates to a method for signaling of control information from a first network device to a second network device for transmission of at least two data packets, and network devices adapted to perform said method.

### Background

In wireless communication networks, control information for transmission of a data packet comprising e.g. information about MCS (MCS = Modulation and Coding Scheme), radio resources and HARQ (HARQ = Hybrid Automatic Repeat Request) are signaled between network devices. E.g. in LTE systems (LTE = Long Term Evolution) applying frequency division duplex (FDD), uplink and downlink scheduling assignments are signaled in downlink control information (DCI) using different DCI formats 1A, 1B, 1C, 1, and 2:

DCI format 1 includes a 3bit HARQ process number identifier and a 5bit MCS identifier for a single packet. If control information for multiple data packets is conveyed by means of DCI format 1, the signaling payload before coding increases linearly with the number of data packets that have to be transmitted.

DCI Format 2 allows to transmit control information for two data packets received by the same user within a subframe, for use with dual-stream spatial multiplex transmission. It includes a single 3bit HARQ process number identifier and two 5bit MCS identifiers, one for each stream, and the stream is implicitly identified by the order of the MCS identifiers.

In the US patent application publication US 2008/0101281 A1, a method and an apparatus for reducing overhead for signalling is disclosed. A user bit map field is sent for assignment of users to resources corresponding to bit positions in a resource bit map field. The resource bit map field is in turn a message indicating which resources are assigned to mobile stations. The user bit map field includes an indicator bit which is used to designate to the mobile stations that a portion of the resource bit map field is used for additional data to designated users.

In the US patent application publication US 2008/0056229 A1, a method for wireless communication is disclosed, where a control packet is only sent with a retransmission of a data packet where the previously transmitted data packet is not completely received, and is not sent for any new transmissions sent to the UE.

### Summary

Signaling of control information with the above-described DCI formats is either costly in terms of signaling overhead, e.g. when DCI format 1 is used, as full signaling for each data packet is required, or very restrictive, e.g. when DCI format 2 is used, as the same HARQ process number ID for both data packets is used.

The object of the invention is thus to propose a method for signaling of control information for transmission of data packets which requires a low signaling overhead and which offers at the same time a high degree of flexibility with respect to the set of radio parameters that has to be signaled.

A basic idea of the invention is to apply complete control signaling to a first data packet or a first subset of data packets, and reduced control signaling to at least one of the remaining data packets. A complete control information for the at least one of the remaining data packets is determined using a control information for said first data packet or said first subset of data packets and a control information for said at least one of the remaining data packets. Such a reduced control signaling can be implemented by means of so-called delta signaling, i.e. a complete control information can be derived from a previously signaled control information and a signaled difference to said previously signaled control information. A preferred use is for signaling of control information comprising a HARQ process number identifier or an MCS identifier.

The object of the invention is thus achieved by a method for signaling of control information from a first network device to a second network device for transmission of at least two data packets, wherein

- control information for a data packet of said at least two data packets and control information for at least one further data packet of said at least two data packets are signaled from the first network device to the second network device,
- and a complete control information for the data packet of said at least two data packets is determined using the control information for said data packet of said at least two data packets and the control information for said at least one further data packet of said at least two data packets.

The object of the invention is furthermore achieved by a network device for signaling of control information to a further network device for transmission of at least two data packets, wherein said network device is adapted to

- determine control information for a data packet of said at least two data packets and control information for at least one further data packet of said at least two data packets so that a complete control information for the data packet of said at least two data packets can be determined using the control information for said data packet of said at least two data packets and the control information for said at least one further data packet of said at least two data packets,
- and signal the control information for the data packet of said at least two data packets and the control information for the at least one further data packet of said at least two data packets to the further network device.

The object of the invention is yet furthermore achieved by a network device for receiving control information from a further network device for transmission of at least two data packets, wherein said network device is adapted to

- receive control information for a data packet of said at least two data packets and control information for at least one further data packet of said at least two data packets from the further network device,

- and determine a complete control information for the data packet of said at least two data packets using the control information for said data packet of said at least two data packets and the control information for said at least one further data packet of said at least two data packets.

The invention is described in the following within the framework of 3GPP LTE, however as the invention is not restricted to 3GPP LTE or enhancements thereof, but can in principle be applied in other networks that use scheduling principles based on retransmission, like e.g. in HSPA or WiMAX networks (WiMAX = Worldwide Interoperability for Microwave Access), in the following, instead of the term eNodeB used in LTE, the more general term base station is used.
Further developments of the invention can be gathered from the dependent claims and the following description.

### Brief description of the figures

In the following the invention will be explained further making reference to the attached drawings.

Fig. 1 schematically shows a communication network in which the invention can be implemented.

Fig. 2 schematically shows the structure of a user terminal and a base station in which the invention can be implemented.

Fig. 3 schematically shows the content of DCI format 1 and 2 of LTE Rel8 for FDD.

Fig. 4 schematically shows examples of HARQ protocols with state-dependent signaling of a first HARQ process number ID and delta-signaling of a second HARQ process number ID according to an embodiment of the invention.

Fig. 5 schematically shows an example of delta signaling for contiguous resource allocation according to an embodiment of the invention.

### Description of the embodiments

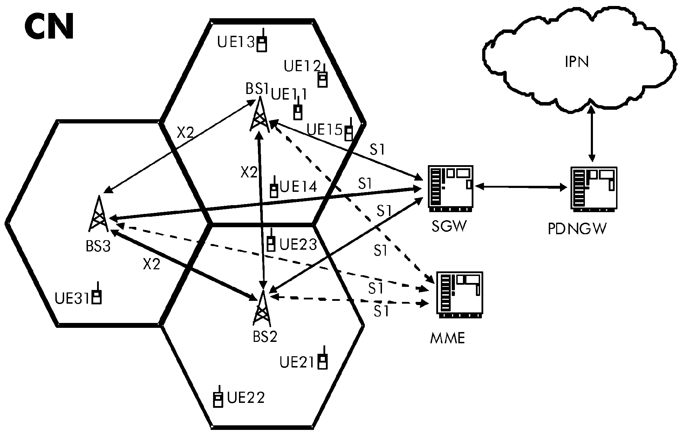

Fig. 1 shows as an example of a communication network in which the invention can be implemented a communication network CN according to the standard 3GPP LTE.
Said communication network CN comprises base stations BS1-BS3, user terminals UE11-UE31, a serving gateway SGW, a packet data network gateway PDNGW, and a mobility management entity MME.
The user terminals UE11-UE15 are connected via radio connections to the base station BS1, the user terminals UE21-UE23 are connected via radio connections to the base station BS2, and the user terminal UE31 is connected via a radio connection to the base station BS3. In future evolutions of LTE, each of the user terminals UE11-UE31 can also be connected via radio connections to multiple of said base stations BS1-BS3.
The base stations BS1-BS3 are in turn connected to the serving gateway SGW and to the mobility management entity MME, i.e. to the evolved packet core (EPC), via the so-called S1 interface.
The base stations BS1-BS3 are connected among each other via the so-called X2 interface.
The serving gateway SGW is connected to the packet data network gateway PDNGW, which is in turn connected to an external IP network IPN.

The S1 interface is a standardized interface between one of the base stations BS1-BS3, i.e. an eNodeB in this example, and the Evolved Packet Core (EPC). The S1 interface has two flavours, S1-MME for exchange of signaling messages between one of the base stations BS1-BS3 and the mobility management entity MME and S1-U for the transport of user datagrams between one of the base stations BS1-BS3 and the serving gateway SGW.

The X2 interface is added in 3GPP LTE standard primarily in order to transfer the user plane signal and the control plane signal during handover.

The serving gateway SGW performs routing of the IP user data between the base stations BS1-BS3, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal and the respective serving base station BS1-BS3.

The mobility management entity MME performs tasks of the subscriber management and the session management, and also performs the mobility management during handover between different access networks.

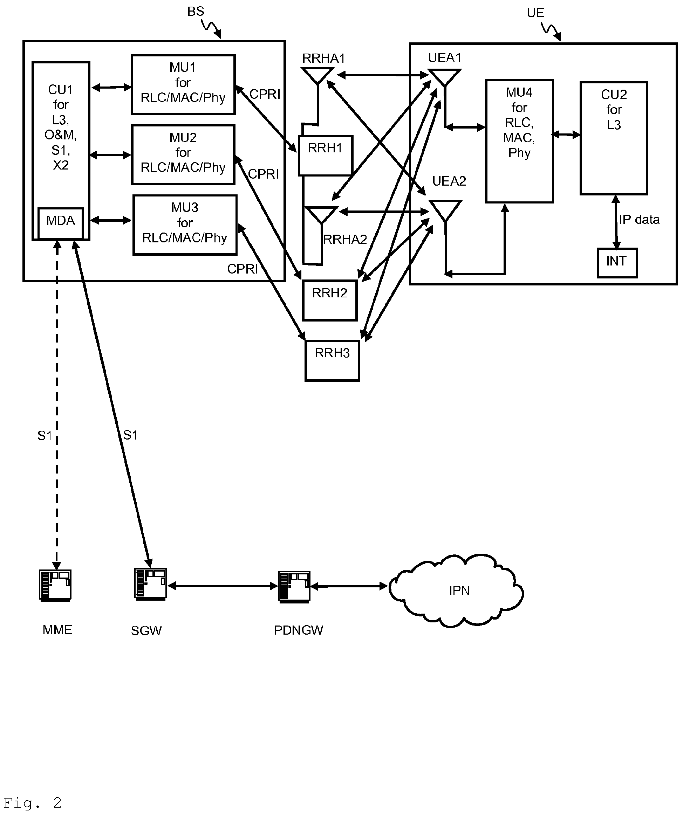

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

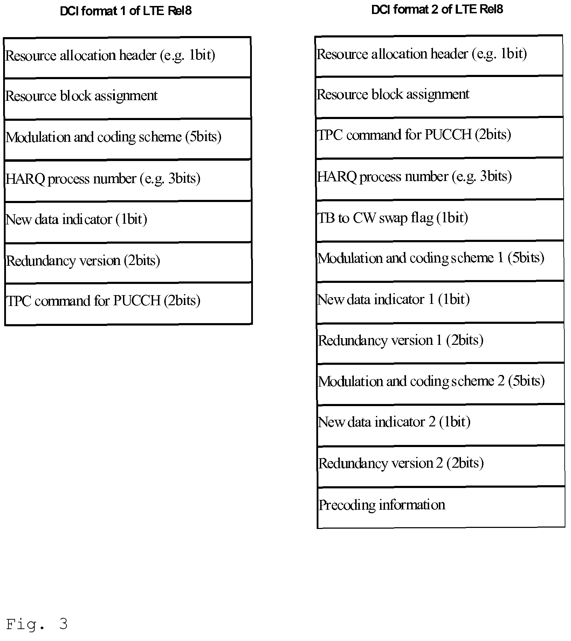

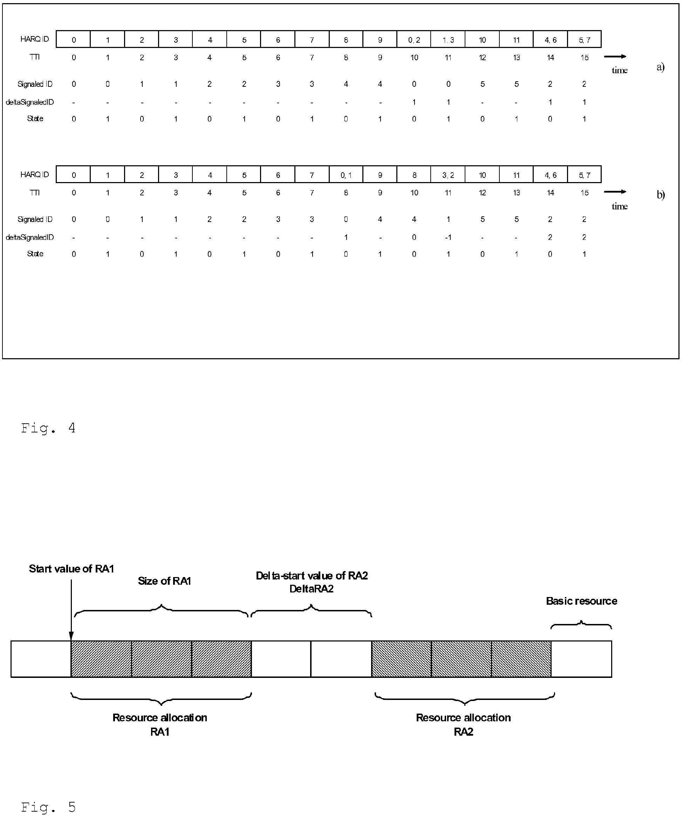

In the sequel, first the shortcomings of the current signaling of control information using DCI formats of LTE/FDD as e.g. depicted in fig. 3 for the case of DCI format 1 and 2 is described, and then in figs. 4 and 5, signaling protocols according to embodiments of the invention are disclosed which overcome said shortcomings.

As already mentioned above, in LTE systems applying frequency division duplex (FDD), downlink scheduling assignments are signaled in downlink control information (DCI), e.g. from the base station BS to the user terminal UE in fig. 2, using different DCI formats 1A, 1B, 1C, 1, and 2.

Fig. 3 exemplarily shows the content of DCI format 1 and DCI format 2 respectively.

The DCI format 1 includes the following elements:

- a resource allocation header indicating resource allocation type 0 or 1.

- a resource block assignment, with resource allocation type 0 pointing to groups of contiguous resource blocks with the size of the groups being limited by the downlink cell bandwidth, and with resource allocation type 1 having the total number of resource blocks being divided into dispersed subsets.

- a 5bit MCS identifier for a single data packet, comprising information about the modulation scheme, the code rate, and the transport block size.

- a HARQ process number identifier with a size of 3 bits for FDD and 4 bits for TDD comprising information about the process which has to be used for soft combining.

- a 1bit new data indicator for clearing the soft buffer for initial transmissions.

- a 2bit redundancy version indicator indicating which redundancy version is used for HARQ with incremental redundancy.

- a 2bit Transmit Power Control (TPC) command for a Physical Uplink Control Channel (PUCCH).

Thus, DCI format 1 includes in particular a 3bit HARQ process number identifier and a 5bit MCS identifier for a single data packet. If control information for multiple data packets is conveyed by means of DCI format 1, the signaling payload before coding increases linearly with the number of data packets that have to be transmitted.

The DCI format 2 includes in addition to the content of DCI format 1 the following elements:

- a 1bit transport block (TB) to codeword (CW) swap flag that indicates whether or not in case of spatial multiplexing the two codewords have to be swapped before being sent to the HARQ processes.

- a precoding information for spatial multiplexing.

- a second 5bit MCS identifier for a second data packet, comprising information about the modulation scheme, the code rate, and the transport block size.

- a second 1bit new data indicator for a second data packet for clearing the soft buffer for initial transmissions.

- a second 2bit redundancy version indicator for a second data packet indicating which redundancy version is used for HARQ with incremental redundancy.

Thus, DCI format 2 allows to transmit control information for two data packets received by the same user within a subframe, for use with dual-stream spatial multiplex transmission. It includes in case of FDD a single 3bit HARQ process number identifier and two 5bit MCS identifiers, one for each stream, and the stream is implicitly identified by the order of the MCS identifiers. Using DCI format 2 is very restrictive, as the same HARQ process number ID is used for both data packets.

In order to come to a method for signaling of control information for transmission of data packets which requires a low signaling overhead and which offers at the same time a high degree of flexibility with respect to the set of radio parameters that has to be signaled, according to an embodiment of the invention complete control signaling to a first data packet or a first subset of data packets, and reduced control signaling to at least one of the remaining data packets is applied. A complete control information for the at least one of the remaining data packets is determined using a control information for said first data packet or said first subset of data packets and a control information for said at least one of the remaining data packets. Such a reduced control signaling can be implemented by means of so-called delta signaling, i.e. a complete control information can be derived from a previously signaled control information and a signaled difference to said previously signaled control information. Previously signaled control information in this context can relate either to control information in an earlier sent subframe, or to control information in another packet in the same subframe. A preferred use is for signaling of control information comprising a HARQ process number identifier or an MCS identifier as described above.

Exemplarily, the invention is described in the following for the transmission of a HARQ process number identifier (ID) with a maximum number of N HARQ processes, e.g. N=8.

A 3bit *SignaledID* with values 0,1,2...7 referring to a first data packet and signaled e.g. within DCI on a PDCCH shall allow to obtain the HARQ process number ID of the first data packet *HARQprocessID*1 according to

$$HARQprocessID1 = SignaledID \ .$$

A 2bit *deltcaSignaledID,* e.g. with values 1,2...4, referring to a second data packet and signaled e.g. within the same DCI on the PDCCH shall allow to obtain the HARQ process number ID of the second data packet *HARQprocessID*2 according to

$$HARQprocessID2 = (SignaledID + deltaSignaledID)\,\mathrm{mod}\,N$$

In other words, the HARQ process number ID of the second data packet *HARQprocessID*2 is within a certain window as seen from the the HARQ process number ID of the first data packet *HARQprocessID*1. The window can be forward looking, e.g. 2bit *deltcaSigncaledID* interpreted as 1,2,3,4, or backward looking, e.g. 2bit *deltaSignaledID* interpreted as -1,-2,-3,-4, or both, e.g. 2bit *deltaSignaledID* interpreted as -2, -1, +1, +2. In these examples, the value zero is excluded, as would be typical for addressing two different HARQ processes of the same user. However, the value zero may be included in multi-user case, e.g. 2bit *deltaSignaledID* interpreted as 0,1,2,3.

In further embodiments, the interpretation of *deltaSignaledID* can also be configurable, typically by means of Radio Resource Control (RRC) signaling or possibly via system information broadcast.

The interpretation of *deltaSigncaledID* can be fully configurable in the sense that the mapping of bits, e.g. 2bits, to values, e.g. 1,2,3,4 or -2,-1,+1,+2, can be configured.

The interpretation of *deltaSigncaledID* can also be partially configurable, e.g by means of a configurable *stepSize* parameter, e.g. *stepSize*=1 or 2, which leads to the HARQ process number ID of the second data packet *HARQprocessID*2 according to

$$HARQprocessID2 = (SignaledID + stepSize \times deltaSignaledID) \bmod N \ .$$

The preferred use case for such a signaling of a HARQ process number ID are multiple data packet retransmissions to a user within the same subframe e.g. with small parity packets.

Delta signaling as described above can be applied likewise for signaling of the modulation and coding scheme (MCS).

With multiple data packet retransmissions to a user within the same subframe, it can often be assumed that the data packets have similar MCS, taking into account changes due to small scale fading, but not due to large scale fading.

With superposition transmission techniques such as Interleave Division Multiple Access (IDMA), it appears preferable that the superposed data packets have similar MCS.

Further, delta signaling is applicable also with conventional HARQ retransmissions, i.e. with signaling for a single data packet rather than for multiple packets, where the signaled delta of an MCS of a retransmission may relate to the MCS of an initial transmission.

Delta signaling as described above can also be applied likewise for signaling of at least one of the following: Transport Block Size (TBS), Modulation and Coding Scheme (MCS), and Code Rate.

In an embodiment of the invention, a delta signaling for a HARQ process number ID can be combined with a delta signaling of a MCS ID. In this case, e.g. a modified DCI format 2 with identical size could be applied for signaling two data packet retransmissions of a user within a subframe by replacing the second 5bit MCS identifier for a second data packet by a 2bit delta signaling of a HARQ process number ID plus a 3bit delta signaling of a MCS ID.

In a further embodiment of the invention, in order to further reduce signaling overhead for transmission of HARQ process number ID, a state variable is introduced, e.g. state 0 in even-numbered subframes, and state 1 in odd-numbered subframes. This is equivalent to introducing mild scheduling constraints, e.g. an even-numbered HARQ process number ID can be used only in even-numbered subframes.

Fig. 4 schematically shows two examples of HARQ protocols with such a state-dependent signaling of a first HARQ process number ID and delta-signaling of a second HARQ process number ID according to an embodiment of the invention. Said HARQ protocols can e.g. be used for downlink scheduling assignments signaled in downlink control information (DCI), e.g. from the base station BS to the user terminal UE in fig. 2.

For each of the two examples a) and b) in fig. 4, in the first row HARQ process number IDs, named HARQ ID, are given for 16 transmission time intervals TTI 0-15 as depicted in the second row. The HARQ process number ID is calculated based on a signaled ID, a delta signaled ID, and a state as given in rows 3, 4 and 5 respectively. In each TTI, either one or two HARQ process number IDs are given in row 1. Two HARQ process number IDs are given if in the respective TTI a delta signaled ID is present, so that a second HARQ process number ID can be derived. The signaled ID and the delta signaled ID are signaled explicitly, e.g. from the base station BS to the user terminal UE in fig. 2, whereas the state can be derived from the TTI and needs not to be signaled.

In both examples in fig. 4, the state given in row 5 is binary and alternating between 0 and 1 from TTI to TTI. Furthermore, a maximum number of N HARQ processes, e.g. N=16 in the examples depicted in fig. 4, are defined.

A 3bit *SignaledID* with values 0,1, ...,7 as given in row 3 refers to a first HARQ process of a first data packet, and a 2bit *deltaSignaledID* with values 0,1,2,3 as given in row 4 of the first example a), and with values -1,0,1,2 as given in row 4 of the second example b) refers to a second HARQ process of a second data packet.

The HARQ process number ID of the first HARQ process can e.g. be obtained according to

$$HARQprocessID1 = 2SignaledID + state \ .$$

In the first example depicted in fig. 4 denoted with a), the HARQ process number ID of the second HARQ process can be obtained according to

$$HARQprocessID2 = (2(SignaledID + deltaSignaledID) + state) \bmod N \ .$$

For the TTIs 0-9, 12 and 13, only one HARQ process number ID of a first HARQ process is given in row 1, as no *deltaSignale-dID* is signaled in said TTIs.

Only in the TTIs 10, 11, 14 and 15, a further HARQ process number ID of a second HARQ process is additionally given in row 1, as only in said TTIs a *deltaSignaledID* is signaled.

In the second example depicted in fig. 4 denoted with b), the HARQ process number ID of the second HARQ process can be obtained according to

$$HARQprocessID2 = ((2SignaledID + deltaSignaledID) + state) \bmod N$$

For the TTIs 0-7, 9, 12 and 13, only one HARQ process number ID of a first HARQ process is given in row 1, as no *deltaSignaledID* is signaled in said TTIs.

Only in the TTIs 8, 10, 11, 14 and 15, a further HARQ process number ID of a second HARQ process is additionally given in row 1, as only in said TTIs a *deltaSignaledID* is signaled.

Delta signaling used for the invention as described above is not confined to signaling of a HARQ process number ID or an MCS ID, but can also have further applications.

E.g., in another embodiment of the invention, resource allocations (RA), as e.g. resource blocks in LTE or spreading codes in HSPA, can be signaled by means of delta signaling as described above. With contiguous resource allocations, which can be characterized by a starting value and a length, a delta parameter can indicate a distance between two resource allocations RA1 and RA2 as illustrated in fig. 5.

Fig. 5 schematically shows an example of delta signaling for contiguous resource allocation according to an embodiment of the invention.

Fig. 5 shows 10 concatenated basic resources, and a first and a second resource allocation RA1 and RA2 respectively each comprising 3 basic resources. The distance DeltaRA2 between the end of the first resource allocation RA1 and the beginning of the second resource allocation RA2 is 2 basic resources, and only the signaling of said distance DeltaRA2, e.g. from the base station BS to the user terminal UE in fig. 2, is sufficient for signaling of the second resource allocation RA2 if it is implicitly assumed in the receiver, e.g. in the user terminal UE in fig. 2, that both resource allocations RA1 and RA2 have an equal size of e.g. 3 basic resources in the embodiment depicted in fig. 5. In an alternative embodiment, the distance DeltaRA2 can also be defined as the distance between the beginning of the first resource allocation RA1 and the beginning of the second resource allocation RA2. A use case may be multiple small-size retransmissions to a user terminal within a subframe. The embodiment is in principle applicable also to non-contiguous resource allocations e.g. with identical allocation patterns for both resource allocations RA1 and RA2.

**Claims**

1. A method for signaling of control information from a base station (BS) to a user terminal (UE) for transmission of at least two data packets, the method comprising:

   • signaling control information for a data packet of said at least two data packets and control information for at least one further data packet of said at least two data packets from the base station (BS) to the user terminal (UE),
   • determining a complete control information for the data packet of said at least two data packets using the control information for said data packet of said at least two data packets and the control information for said at least one further data packet of said at least two data packets,

   wherein said complete control information comprises a resource allocation identifier for the data packet of said at least two data packets which is determined using the resource allocation identifier comprised in the control information for said at least one further data packet indicating start value and length for the further data packet, and a delta parameter comprised in the control information for the data packet indicating a distance between the data packet and the further data packet.

2. A method according to claim 1, wherein said complete control information for the data packet of said at least two data packets comprises at least one of a group of Hybrid Automatic Repeat Request process number identifier, Modulation and Coding Scheme identifier, and Transport Block Size identifier.

3. A method according to claim 2, wherein the at least one identifier comprised in the complete control information for the data packet of said at least two data packets is determined by a modulo operation applied to the sum of a further identifier comprised in the control information for said at least one data packet of said at least two data packets and a corresponding at least one identifier comprised in the control information for said at least one further data packet of said at least two data packets.

4. A method according to claim 3, wherein at least one of a group of an additive factor and a multiplicative factor is applied to at least one of the further identifier comprised in the control information for said at least one data packet of said at least two data packets and the corresponding at least one identifier comprised in the control information for said at least one further data packet of said at least two data packets before said modulo operation is applied.

5. A method according to any of the preceding claims, wherein the control information for the data packet of said at least two data packets and the control information for the at least one further data packet of said at least two data packets are signaled from the base station (BS) to the user terminal (UE) in at least one codeword.

6. A method according to any of the claims 1 to 4, wherein the control information for the data packet of said at least two data packets and the control information for the at least one further data packet of said at least two data packets are signaled from the base station (BS) to the user terminal (UE) using at least one of a control channel and inband signaling.

7. A base station (BS) for signaling of control information to a user terminal (UE) for transmission of at least two data packets, wherein said base station (BS) is adapted to:

• map control information for a data packet of said at least two data packets and control information for at least one further data packet of said at least two data packets so that a complete control information for the data packet of said at least two data packets can be determined using the control information for said data packet of said at least two data packets and the control information for said at least one further data packet of said at least two data packets, said complete control information comprising a resource allocation identifier for the data packet of said at least two data packets which is determined using the resource allocation identifier comprised in the control information for said at least one further data packet indicating start value and length for the further data packet, and a delta parameter comprised in the control information for the data packet indicating a distance between the data packet and the further data packet, and
• signal the control information for the data packet of said at least two data packets and the control information for the at least one further data packet of said at least two data packets to the user terminal (UE).

8. A user terminal (UE) for receiving control information from a base station (BS) for transmission of at least two data packets, wherein said user terminal (UE) is adapted to:

• receive control information for a data packet of said at least two data packets and control information for at least one further data packet of said at least two data packets from the further network device (BS), and
• determine a complete control information for the data packet of said at least two data packets using the control information for said data packet of said at least two data packets and the control information for said at least one further data packet of said at least two data packets, said complete control information comprising a resource allocation identifier for the data packet of said at least two data packets which is determined using the resource allocation identifier comprised in the control information for said at least one further data packet indicating start value and length for the further data packet, and a delta parameter comprised in the control information for the data packet indicating a distance between the data packet and the further data packet.

9. A communication network for mobile communication comprising at least one base station (BS) according to claim 7 and at least one user terminal (UE) according to claim 8.

**Patentansprüche**

1. Verfahren zur Signalisierung einer Steuerungsinformation von einer Basisstation (BS) an ein Benutzerendgerät (UE) zur Übertragung von mindestens zwei Datenpaketen, wobei das Verfahren Folgendes umfasst:

• Signalisieren einer Steuerungsinformation für ein Datenpaket der besagten mindestens zwei Datenpakete und einer Steuerungsinformation für mindestens ein weiteres Datenpaket der besagten mindestens zwei Datenpakete von der Basisstation (BS) an das Benutzerendgerät (UE),
• Bestimmen einer vollständigen Steuerungsinformation für das Datenpaket der besagten mindestens zwei Datenpakete unter Verwendung der Steuerungsinformation für besagtes Datenpaket der besagten mindestens zwei Datenpakete und der Steuerungsinformation für das besagte mindestens eine weitere Datenpaket der besagten mindestens zwei Datenpakete,

wobei besagte vollständige Steuerungsinformation einen Ressourcenzuweisungsidentifikator für das Datenpaket der besagten mindestens zwei Datenpakete umfasst, der bestimmt wird unter Verwendung des Ressourcenzuweisungsidentifikators, der in der Steuerungsinformation für das besagte mindestens eine weitere Datenpaket enthalten ist, das einen Startwert und eine Länge für das weitere Datenpaket angibt, und einen Deltaparameter, der in der Steuerungsinformation für das Datenpaket enthalten ist, das einen Abstand zwischen dem Datenpaket und dem weiteren Datenpaket angibt.

2. Verfahren nach Anspruch 1, wobei besagte vollständige Steuerungsinformation für das Datenpaket der besagten mindestens zwei Datenpakete mindestens eines aus einer Gruppe von Hybrid Automatic Repeat Request-Prozessnummernidentifikator, Modulation und Coding Scheme-Identifikator und Transport Block Size-Identifikator umfasst.

3. Verfahren nach Anspruch 2, wobei der mindestens eine Identifikator, der in der vollständigen Steuerungsinformation für das Datenpaket der besagten mindestens zwei Datenpakete enthalten ist, durch eine Modulo-Operation bestimmt wird, die auf die Summe eines weiteren Identifikators, der in der Steuerungsinformation für das besagte mindestens eine Datenpaket der besagten mindestens zwei Datenpakete enthalten ist, und eines entsprechenden mindestens einen Identifikators angewendet wird, der in der Steuerungsinformation für das besagte mindestens eine weitere Datenpaket der besagten mindestens zwei Datenpakete enthalten ist.

4. Verfahren nach Anspruch 3, wobei mindestens einer aus einer Gruppe von additivem Faktor und multiplikativem Faktor auf mindestens einen des weiteren Identifikators, der in der Steuerungsinformation für das besagte mindestens eine Datenpaket der besagten mindestens zwei Datenpakete enthalten ist, und des entsprechenden mindestens einen Identifikators angewendet wird, der in der Steuerungsinformation für das besagte mindestens eine weitere Datenpaket der besagten mindestens zwei Datenpakete enthalten ist, bevor besagte Modulo-Operation angewendet wird.

5. Verfahren nach einem beliebigen der vorstehenden Ansprüche, wobei die Steuerungsinformation für das Datenpaket der besagten mindestens zwei Datenpakete und die Steuerungsinformation für das mindestens eine weitere Datenpaket der besagten mindestens zwei Datenpakete von der Basisstation (BS) an das Benutzerendgerät (UE) in mindestens einem Codewort signalisiert werden.

6. Verfahren nach einem beliebigen der Ansprüche 1 bis 4, wobei die Steuerungsinformation für das Datenpaket der besagten mindestens zwei Datenpakete und die Steuerungsinformation für das mindestens eine weitere Datenpaket der besagten mindestens zwei Datenpakete von der Basisstation (BS) an das Benutzerendgerät (UE) unter Verwendung von mindestens einem aus Kontrollkanal und Innenband-Signalisierung signalisiert werden.

7. Basisstation (BS) zur Signalisierung einer Steuerungsinformation an ein Benutzerendgerät (UE) zur Übertragung von mindestens zwei Datenpaketen, wobei besagte Basisstation (BS) zu Folgendem angepasst ist:

   • Mapping einer Steuerungsinformation für ein Datenpaket der besagten mindestens zwei Datenpakete und einer Steuerungsinformation für mindestens ein weiteres Datenpaket der besagten mindestens zwei Datenpakete, so dass eine vollständige Steuerungsinformation für das Datenpaket der besagten mindestens zwei Datenpakete unter Verwendung der Steuerungsinformation für besagtes Datenpaket der besagten mindestens zwei Datenpakete und der Steuerungsinformation für das besagte mindestens eine weitere Datenpaket der besagten mindestens zwei Datenpakete bestimmt werden kann, wobei besagte vollständige Steuerungsinformation einen Ressourcenzuweisungsidentifikator für das Datenpaket der besagten mindestens zwei Datenpakete umfasst, der bestimmt wird unter Verwendung des Ressourcenzuweisungsidentifikators, der in der Steuerungsinformation für das besagte mindestens eine weitere Datenpaket enthalten ist, das einen Startwert und eine Länge für das weitere Datenpaket angibt, und einen Deltaparameter, der in der Steuerungsinformation für das Datenpaket enthalten ist, das einen Abstand zwischen dem Datenpaket und dem weiteren Datenpaket angibt, und
   • Signalisieren der Steuerungsinformation für das Datenpaket der besagten mindestens zwei Datenpakete und der Steuerungsinformation für das mindestens eine weitere Datenpaket der besagten mindestens zwei Datenpakete an das Benutzerendgerät (UE).

8. Benutzerendgerät (UE) zum Empfangen einer Steuerungsinformation von einer Basisstation (BS) zur Übertragung von mindestens zwei Datenpaketen, wobei besagtes Benutzerendgerät (UE) zu Folgendem angepasst ist:

   • Empfangen einer Steuerungsinformation für ein Datenpaket der besagten mindestens zwei Datenpakete und einer Steuerungsinformation für mindestens ein weiteres Datenpaket der besagten mindestens zwei Datenpakete von der weiteren Netzwerkvorrichtung (BS), und

• Bestimmen einer vollständigen Steuerungsinformation für das Datenpaket der besagten mindestens zwei Datenpakete unter Verwendung der Steuerungsinformation für besagtes Datenpaket der besagten mindestens zwei Datenpakete und der Steuerungsinformation für das besagte mindestens eine weitere Datenpaket der besagten mindestens zwei Datenpakete, wobei besagte vollständige Steuerungsinformation einen Ressourcenzuweisungsidentifikator für das Datenpaket der besagten mindestens zwei Datenpakete umfasst, der bestimmt wird unter Verwendung des Ressourcenzuweisungsidentifikators, der in der Steuerungsinformation für das besagte mindestens eine weitere Datenpaket enthalten ist, das einen Startwert und eine Länge für das weitere Datenpaket angibt, und einen Deltaparameter, der in der Steuerungsinformation für das Datenpaket enthalten ist, das einen Abstand zwischen dem Datenpaket und dem weiteren Datenpaket angibt.

9. Kommunikationsnetzwerk für mobile Kommunikation, umfassend mindestens eine Basisstation (BS) nach Anspruch 7 und mindestens ein Benutzerendgerät (UE) nach Anspruch 8.

**Revendications**

1. Procédé de signalisation d'informations de commande à partir d'une station de base (BS) vers un terminal utilisateur (UE) pour la transmission d'au moins deux paquets de données, le procédé comprenant les étapes suivantes :

   • signaler des informations de commande pour un paquet de données parmi lesdits au moins deux paquets de données et des informations de commande pour au moins un autre paquet de données parmi lesdits au moins deux paquets de données à partir de la station de base (BS) vers le terminal utilisateur (UE),
   • déterminer des informations de commande complètes pour le paquet de données parmi lesdits au moins deux paquets de données en utilisant les informations de commande pour ledit paquet de données parmi lesdits au moins deux paquets de données et les informations de commande pour ledit au moins un autre paquet de données parmi lesdits au moins deux paquets de données,

   dans lequel lesdites informations de commande complètes comprennent un identifiant d'attribution de ressources pour le paquet de données parmi lesdits au moins deux paquets de données qui est déterminé en utilisant l'identifiant d'attribution de ressources compris dans les informations de commande pour ledit au moins un autre paquet de données indiquant la valeur de départ et la longueur pour l'autre paquet de données, et un paramètre delta compris dans les informations de commande pour le paquet de données indiquant une distance entre le paquet de données et l'autre paquet de données.

2. Procédé selon la revendication 1, dans lequel lesdites informations de commande complètes pour le paquet de données parmi lesdits au moins deux paquets de données comprennent au moins un identifiant parmi un groupe constitué d'un identifiant de nombre de processus de demande de répétition automatique hybride, d'un identifiant de schéma de modulation et de codage et d'un identifiant de taille de bloc de transport.

3. Procédé selon la revendication 2, dans lequel l'au moins un identifiant compris dans les informations de commande complètes pour le paquet de données parmi lesdits au moins deux paquets de données est déterminé par une opération modulo appliquée à la somme d'un autre identifiant compris dans les informations de commande pour ledit au moins un paquet de données parmi lesdits au moins deux paquets de données et d'au moins un identifiant correspondant compris dans les informations de commande pour ledit au moins un autre paquet de données parmi lesdits au moins deux paquets de données.

4. Procédé selon la revendication 3, dans lequel au moins un facteur parmi un groupe constitué d'un facteur additif et d'un facteur multiplicatif est appliqué à au moins un identifiant parmi l'autre identifiant compris dans les informations de commande pour ledit au moins un paquet de données parmi lesdits au moins deux paquets de données et l'au moins un identifiant correspondant compris dans les informations de commande pour ledit au moins un autre paquet de données parmi lesdits au moins deux paquets de données avant que ladite opération modulo soit appliquée.

5. Procédé selon l'une quelconque des revendications précédentes, dans lequel les informations de commande pour le paquet de données parmi lesdits au moins deux paquets de données et les informations de commande pour l'au moins un autre paquet de données parmi lesdits au moins deux paquets de données sont signalées à partir de la station de base (BS) vers le terminal utilisateur (UE) dans au moins un mot de code.

6. Procédé selon l'une quelconque des revendications 1 à 4, dans lequel les informations de commande pour le paquet de données parmi lesdits au moins deux paquets de données et les informations de commande pour l'au moins un autre paquet de données parmi lesdits au moins deux paquets de données sont signalées à partir de la station de base (BS) vers le terminal utilisateur (UE) en utilisant un canal de commande et/ou une signalisation dans la bande.

7. Station de base (BS) pour signaler des informations de commande à un terminal utilisateur (UE) pour la transmission d'au moins deux paquets de données, ladite station de base (BS) étant adaptée pour :

   • mettre en correspondance des informations de commande pour un paquet de données parmi lesdits au moins deux paquets de données et des informations de commande pour au moins un autre paquet de données parmi lesdits au moins deux paquets de données de sorte que des informations de commande complètes pour le paquet de données parmi lesdits au moins deux paquets de données puissent être déterminées en utilisant les informations de commande pour ledit paquet de données parmi lesdits au moins deux paquets de données et les informations de commande pour ledit au moins un autre paquet de données parmi lesdits au moins deux paquets de données, lesdites informations de commande complètes comprennent un identifiant d'attribution de ressources pour le paquet de données parmi lesdits au moins deux paquets de données qui est déterminé en utilisant l'identifiant d'attribution de ressources compris dans les informations de commande pour ledit au moins un autre paquet de données indiquant la valeur de départ et la longueur pour l'autre paquet de données, et un paramètre delta compris dans les informations de commande pour le paquet de données indiquant une distance entre le paquet de données et l'autre paquet de données, et
   • signaler des informations de commande pour le paquet de données parmi lesdits au moins deux paquets de données et des informations de commande pour l'au moins un autre paquet de données parmi lesdits au moins deux paquets de données au terminal utilisateur (UE).

8. Terminal utilisateur (UE) pour recevoir des informations de commande à partir d'une station de base (BS) pour la transmission d'au moins deux paquets de données, ledit terminal utilisateur (UE) étant adapté pour :

   • recevoir des informations de commande pour un paquet de données parmi lesdits au moins deux paquets de données et des informations de commande pour au moins un autre paquet de données parmi lesdits au moins deux paquets de données à partir de l'autre dispositif de réseau (BS), et
   • déterminer des informations de commande complètes pour le paquet de données parmi lesdits au moins deux paquets de données en utilisant les informations de commande pour ledit paquet de données parmi lesdits au moins deux paquets de données et les informations de commande pour ledit au moins un autre paquet de données parmi lesdits au moins deux paquets de données, lesdites informations de commande complètes comprenant un identifiant d'attribution de ressources pour le paquet de données parmi lesdits au moins deux paquets de données qui est déterminé en utilisant l'identifiant d'attribution de ressources compris dans les informations de commande pour ledit au moins un autre paquet de données indiquant la valeur de départ et la longueur pour l'autre paquet de données, et un paramètre delta compris dans tes informations de commande pour le paquet de données indiquant une distance entre le paquet de données et l'autre paquet de données.

9. Réseau de communication pour une communication mobile comprenant au moins une station de base (BS) selon la revendication 7 et au moins un terminal utilisateur (UE) selon la revendication 8.

CN

UE13

UE12

BS1 UE11

X2

UE15

X2

UE14

BS3

X2

UE31

UE23

BS2

UE21

UE22

S1

S1

S1

S1

S1

S1

SGW

MME

IPN

PDNGW

Fig. 2

**DCI format 1 of LTE Rel8**

| |
|---|
| Resource allocation header (e.g. 1bit) |
| Resource block assignment |
| Modulation and coding scheme (5bits) |
| HARQ process number (e.g. 3bits) |
| New data indicator (1bit) |
| Redundancy version (2bits) |
| TPC command for PUCCH (2bits) |

**DCI format 2 of LTE Rel8**

| |
|---|
| Resource allocation header (e.g. 1bit) |
| Resource block assignment |
| TPC command for PUCCH (2bits) |
| HARQ process number (e.g. 3bits) |
| TB to CW swap flag (1bit) |
| Modulation and coding scheme 1 (5bits) |
| New data indicator 1 (1bit) |
| Redundancy version 1 (2bits) |
| Modulation and coding scheme 2 (5bits) |
| New data indicator 2 (1bit) |
| Redundancy version 2 (2bits) |
| Precoding information |

Fig. 3

| HARQ ID | 0 | 1 | 2 | 3 | 4 | 5 | 6 | 7 | 8 | 9 | 0, 2 | 1, 3 | 10 | 11 | 4, 6 | 5, 7 | |
|---|---|---|---|---|---|---|---|---|---|---|---|---|---|---|---|---|---|
| TTI | 0 | 1 | 2 | 3 | 4 | 5 | 6 | 7 | 8 | 9 | 10 | 11 | 12 | 13 | 14 | 15 | time |
| Signaled ID | 0 | 0 | 1 | 1 | 2 | 2 | 3 | 3 | 4 | 4 | 0 | 0 | 5 | 5 | 2 | 2 | |
| deltaSignaledID | - | - | - | - | - | - | - | - | - | - | 1 | 1 | - | - | 1 | 1 | |
| State | 0 | 1 | 0 | 1 | 0 | 1 | 0 | 1 | 0 | 1 | 0 | 1 | 0 | 1 | 0 | 1 | |

a)

| HARQ ID | 0 | 1 | 2 | 3 | 4 | 5 | 6 | 7 | 0, 1 | 9 | 8 | 3, 2 | 10 | 11 | 4, 6 | 5, 7 | |
|---|---|---|---|---|---|---|---|---|---|---|---|---|---|---|---|---|---|
| TTI | 0 | 1 | 2 | 3 | 4 | 5 | 6 | 7 | 8 | 9 | 10 | 11 | 12 | 13 | 14 | 15 | time |
| Signaled ID | 0 | 0 | 1 | 1 | 2 | 2 | 3 | 3 | 0 | 4 | 4 | 1 | 5 | 5 | 2 | 2 | |
| deltaSignaledID | - | - | - | - | - | - | - | - | 1 | - | 0 | -1 | - | - | 2 | 2 | |
| State | 0 | 1 | 0 | 1 | 0 | 1 | 0 | 1 | 0 | 1 | 0 | 1 | 0 | 1 | 0 | 1 | |

b)

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080101281 A1
- US 20080056229 A1